# EUROPEAN PATENT APPLICATION

(11) **EP 2 752 788 A1**
(43) Date of publication of application: **09.07.2014**
(21) Application number: 13275001.9
(22) Date of filing: 07.01.2013
(51) Int. Cl.: G06K 9/00, G06K 9/20, G06K 9/62

(54) **Fusion of multi-spectral and range image data**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Methods and apparatus for capturing and processing images, the images being of an area of terrain (6), the methods comprising: using each of a plurality of cameras (14, 16, 18, 20), capturing an image of the area of terrain (6) thereby producing a plurality of camera images, each camera image comprising a plurality of pixels; registering the camera images, thereby producing a plurality of sets of registered pixels; classifying each set of registered pixels; using a range sensor (8), capturing a range image (24) of the area of terrain (6); performing a detection algorithm on the range image (24) to detect an object or terrain feature (26) in the range image; registering the range image (24) with a camera image; and associating the detected object or terrain feature (26) with at least one classified set of registered pixels (28, 30).

## Description

### FIELD OF THE INVENTION

The present invention relates to the capturing and processing of images.

### BACKGROUND

Typically, multi-spectral imaging comprises capturing 2-dimensional image data of a scene across multiple distinct frequency ranges within the electromagnetic spectrum. These images may then be registered. This process provides information about the scene that would not be provided were image data of the scene across only a single frequency range measured.

A spectral signature of an object is the specific combination of electromagnetic (EM) radiation across a range of frequencies that is reflected and absorbed by that object. A spectral signature can be used to identify a type of object. For example, it is known to process a 2-dimensional image to extract a spectral signature for each pixel. These signatures are used to divide the image into groups of similar pixels (referred to as segments). A class is then assigned to each segment. By matching a measured spectral signature of an unknown object to a stored spectral signature that has been assigned a class, that unknown object may be classified.

### SUMMARY OF THE INVENTION

In a first aspect, the present invention provides a method of capturing and processing images, the images being of an area of terrain, the method comprising: using each of a plurality of cameras, capturing an image of the area of terrain thereby producing a plurality of camera images, each camera image comprising a plurality of pixels; registering the camera images, thereby producing a plurality of sets of registered pixels; classifying each set of registered pixels; using a range sensor, capturing a range image of the area of terrain; performing a detection algorithm on the range image to detect an object or terrain feature in the range image; registering the range image with a camera image; and associating the detected object or terrain feature with at least one classified set of registered pixels.

Each of the plurality of cameras may be for detecting electromagnetic radiation in a different frequency range to each of the other cameras in the plurality.

The frequency range in which each camera detects electromagnetic radiation may overlap at least partially with the frequency range in which a different camera detects electromagnetic radiation.

The plurality of cameras may comprise a first camera for detecting electromagnetic radiation in the ultraviolet range of frequencies, a second camera for detecting electromagnetic radiation in the visible light range of frequencies, and a third camera for detecting electromagnetic radiation in the infrared range of frequencies.

The step of classifying each set of registered pixels may comprise, for each set of registered pixels, determining a spectral signature using the image data from each of the plurality of cameras, and classifying a set of registered pixels depending on its spectral signature.

The step of classifying a set of registered pixels depending on its spectral signature may comprise comparing the spectral signature of the set of registered pixels to a spectral signature stored in a database.

The method may further comprise generating the database, wherein the step of generating the database may comprise, using each of a further plurality of cameras, capturing an image of a further area of terrain thereby producing a further plurality of camera images, each camera image in the further plurality comprising a plurality of pixels, registering the camera images in the further plurality, thereby producing a further plurality of sets of registered pixels, for each set of registered pixels in the further plurality, determining a spectral signature using the image data from each of the further plurality of cameras, assigning a class to each of determined spectral signatures, and forming the database from the determined spectral signatures and corresponding assigned classes.

The spectral signature of a set of registered pixels may span at least part of the following frequency ranges: the ultraviolet range of frequencies, the visible light range of frequencies, and the infrared range of frequencies.

The range sensor may be a ground penetrating radar or a LIDAR sensor.

The method may further comprise performing an identification process to identify the detected object or terrain feature using the at least one classified set of registered pixels associated with the detected object or terrain feature.

The plurality of cameras and the range sensor may be mounted on an aircraft.

In a further aspect, the present invention provides apparatus for capturing and processing images, the images being of an area of terrain, the apparatus comprising: a plurality of cameras, each of the plurality of cameras being for capturing an image of the area of terrain thereby producing a plurality of camera images, each camera image comprising a plurality of pixels; a range sensor for capturing a range image of the area of terrain; and one or more processors arranged to: register the camera images, thereby producing a plurality of sets of registered pixels; classify each set of registered pixels; perform a detection algorithm on the range image to detect an object or terrain feature in the range image; register the range image with a camera image; and associate the detected object or terrain feature with at least one classified set of registered pixels.

In a further aspect, the present invention provides an aircraft comprising apparatus in accordance with the preceding aspect.

In a further aspect, the present invention provides a program or plurality of programs arranged such that when executed by a computer system or one or more processors it/they cause the computer system or the one or more processors to operate in accordance with the method of any of the above aspects.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration (not to scale) of a scenario in which an aircraft is used to implement an embodiment of a method of capturing and processing images;
Figure 2 is a schematic illustration (not to scale) of the aircraft used in this scenario to implement an embodiment of a method of capturing and processing images;
Figure 3 is a schematic illustration (not to scale) of the set of imaging sensors on the aircraft;
Figure 4 is a process flow-chart showing certain steps of an embodiment of a method of capturing and processing images implemented by the aircraft;
Figure 5 is a schematic illustration (not to scale) of an example of a spectral signature for a set of registered pixels;
Figure 6 is a process flow-chart showing certain steps of an embodiment of a method of using a database generated using the process of Figure 4 to survey an area of terrain;
Figure 7 is a schematic illustration (not to scale) of an example of an image generated by a Ground Penetrating Radar; and
Figure 8 is a schematic illustration (not to scale) of the Ground Penetrating Radar image together with the associated classification information from the imaging sensor images.

### DETAILED DESCRIPTION

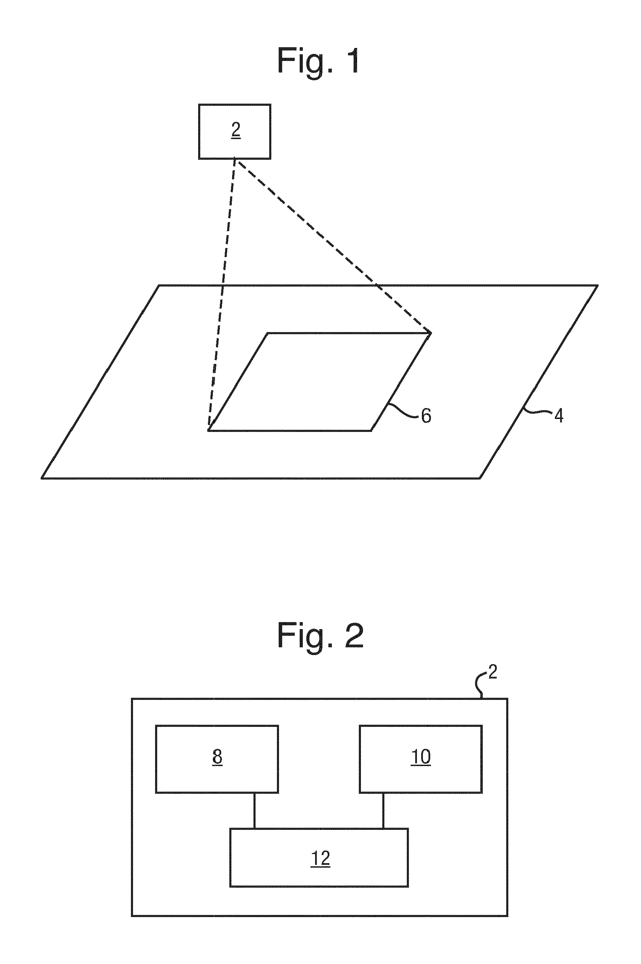

Figure 1 is a schematic illustration (not to scale) of a scenario in which an aircraft 2 is used to implement an embodiment of a method of capturing and processing images.

In this embodiment, the aircraft 2 is an unmanned aircraft.

In this scenario, the aircraft 2 flies over an area of terrain 6.

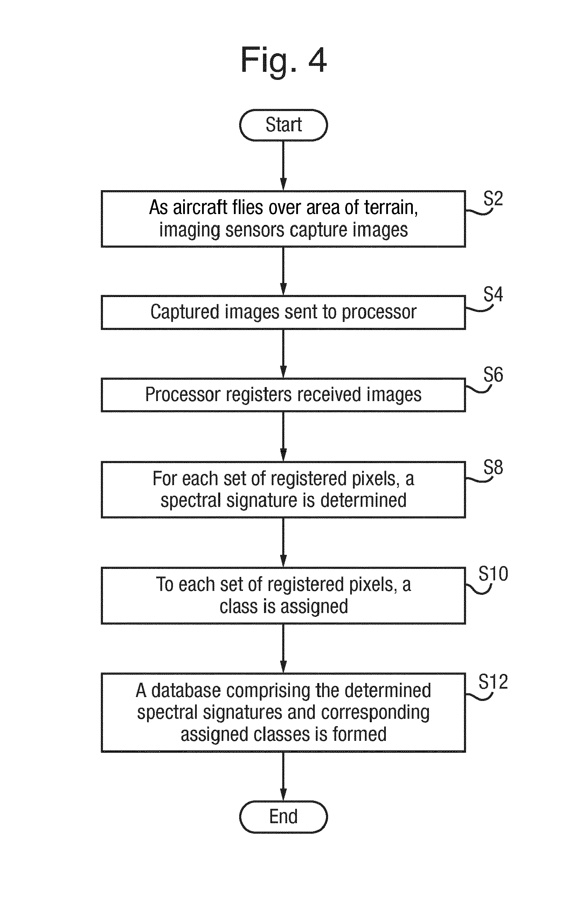

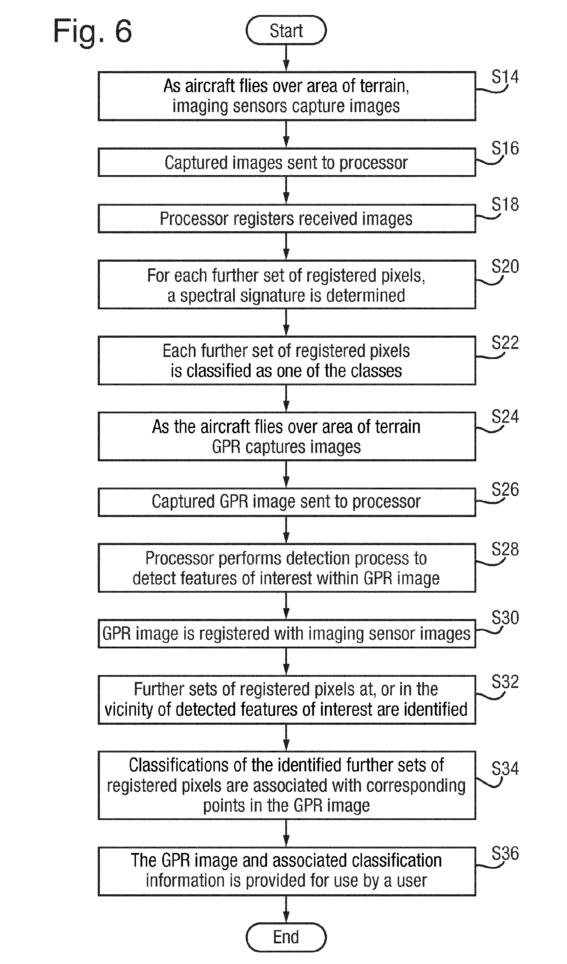

As the aircraft 2 flies over the area of terrain 12, the aircraft captures images of a portion of the area of terrain 6 as described in more detail later below with reference to Figures 4 and 6.

A portion of the area of terrain that the aircraft 2 captures images of is indicated in Figure 1 by the reference numeral 6.

Figure 2 is a schematic illustration (not to scale) of the aircraft 2 used in this scenario to implement an embodiment of a method of capturing and processing images.

In this embodiment, the aircraft 2 comprises a ground penetrating radar (GPR) 8, and a set of imaging sensors (indicated in Figure 2 by a single box and the reference numeral 10), and a processor 12.

In this embodiment, the GPR 8 is arranged to capture an image, hereinafter referred to as the GPR image, of the portion 6 of the area of terrain 4 as the aircraft 2 flies above the area of terrain 4. The GPR 8 is capable of detecting objects on or buried near to the surface of the ground.

In this embodiment, the GPR 8 emits radio waves towards the portion 6 of the area of terrain 4. The GPR 8 detects these radio waves after they have been reflected from the portion 6 and determines a range using these measurements.

In this embodiment, the GPR 8 measures the range (i.e. the distance) between detected objects/terrain features and the GPR 8. Thus, the GPR 8, in effect, produces a "range image" of the portion 6 of the area of terrain 4.

In this embodiment, the GPR 8 is connected to the processor 12 such that images captured by the GPR 8 are sent to the processor, as described in more detail later below with reference to Figure 6.

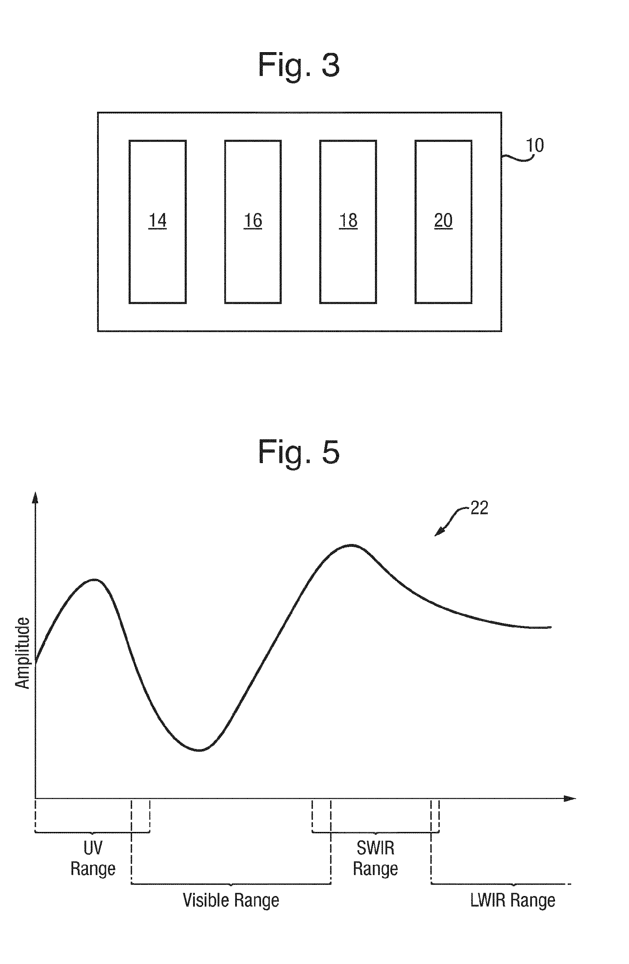

The imaging sensors 10 are described in more detail later below with reference to Figure 3.

In this embodiment, each of the imaging sensors 10 is arranged to capture an image of the portion 6 of the area of terrain 4 as the aircraft 2 flies above the area of terrain 4.

In this embodiment, each of the imaging sensors 10 measures an intensity of electromagnetic radiation reflected from objects/terrain features in the area of terrain 4. Thus, the imaging sensors 10, in effect, produce 2-dimensional image data.

In this embodiment, each of the image sensors 10 is a camera, i.e. a sensor that is used to detect electromagnetic radiation (originating from a remote source, e.g. the Sun) reflected by the portion 6 of the area of terrain 4.

In this embodiment, each of the imaging sensors 10 is connected to the processor 12 such that images captured by the imaging sensors 10 are sent to the processor 12, as described in more detail later below with reference to Figures 4 and 6.

In this embodiment, the processor 12 is connected to the GPR 8 and each of the imaging sensors 10. The processor 12 processes images received from the GPR 8 and the imaging sensors 10 as described in more detail later below with reference to Figures 4 and 6.

Figure 3 is a schematic illustration (not to scale) of the set of imaging sensors 10.

In this embodiment, the set of imaging sensors 10 comprises an ultraviolet (UV) camera 14, a hyperspectral visible-light detecting camera (hereinafter referred to as the "visible camera 16"), a short-wave infrared (SWIR) camera 18, and a long-wave infrared (LWIR) camera 20.

In this embodiment, the UV camera 14 is arranged to capture an image, hereinafter referred to as the UV image, of the portion 6 of the area of terrain 4 as the aircraft 2 flies above the area of terrain 4.

In this embodiment, the UV camera 14 detects electromagnetic radiation within the UV range of the electromagnetic spectrum.

In this embodiment, the visible camera 16 is arranged to capture an image, hereinafter referred to as the visible image, of the portion 6 of the area of terrain 4 as the aircraft 2 flies above the area of terrain 4.

In this embodiment, the visible camera 16 detects electromagnetic radiation within the visible range of the electromagnetic spectrum.

In this embodiment, the SWIR camera 18 is arranged to capture an image, hereinafter referred to as the SWIR image, of the portion 6 of the area of terrain 4 as the aircraft 2 flies above the area of terrain 4.

In this embodiment, the SWIR camera 18 detects electromagnetic radiation within the short-wave infrared range of the electromagnetic spectrum.

In this embodiment, the LWIR camera 20 is arranged to capture an image, hereinafter referred to as the LWIR image, of the portion 6 of the area of terrain 4 as the aircraft 2 flies above the area of terrain 4.

In this embodiment, the LWIR camera 20 detects electromagnetic radiation within the short-wave infrared range of the electromagnetic spectrum.

In this embodiment, the range of frequencies detected by the UV camera 14 overlaps to some extent the range of frequencies detected by the visible camera 16. In this embodiment, the range of frequencies detected by the UV camera 14 does not overlap to any extent the range of frequencies detected by the SWIR camera 18 or the LWIR camera 20.

In this embodiment, the range of frequencies detected by the visible camera 16 overlaps to some extent each of the ranges of frequencies detected by the UV camera 14 and the SWIR camera 18. In this embodiment, the range of frequencies detected by the visible camera 16 does not overlaps to any extent the ranges of frequencies detected by the LWIR camera 20.

In this embodiment, the range of frequencies detected by the SWIR camera 20 overlaps to some extent each of the ranges of frequencies detected by the visible camera 16 and the LWIR camera 22. In this embodiment, the range of frequencies detected by the SWIR camera 20 does not overlap to any extent the range of frequencies detected by the UV camera 14.

In this embodiment, the range of frequencies detected by the LWIR camera 22 overlaps to some extent the range of frequencies detected by the SWIR camera 22. In this embodiment, the range of frequencies detected by the LWIR camera 20 does not overlap to any extent the range of frequencies detected by the visible camera 16 or the UV camera 14.

Figure 4 is a process flow-chart showing certain steps of an embodiment of a method of capturing and processing images implemented by the aircraft 2.

At step s2, as the aircraft 2 flies over the area of terrain 4, each of the imaging sensors 10 is used to capture an image of the portion 6 of the area of terrain 4.

In other words, as the aircraft 2 flies over the area of terrain a UV image of the portion 6 is captured using the UV camera 14, a visible image of the portion 6 is captured using the visible camera 16, a SWIR image of the portion 6 is captured using the SWIR camera 18, and a LWIR image of the portion 6 is captured using the LWIR camera 20.

At step s4, the images captured at step s2 are sent from the imaging sensors 10 to the processor 12.

At step s6, the processor 12 registers the received images, thereby producing a registered set of images.

In this embodiment, a conventional image registration technique is used to register the images, e.g. a feature-based registration process.

The overlapping of the frequency ranges detected by the image sensors 10 (e.g. the overlapping of the range of frequencies detected by the UV camera 14 with the range of frequencies detected by the visible camera 16, and so on) tends to facilitate the registration process.

In this embodiment, the registration process provides that each pixel in a portion of an image is registered with a pixel in each of the other images. For example, a pixel in the UV image is registered to a pixel in each of the visible image, the SWIR image, and the LWIR image.

In other words, in this embodiment a plurality of sets of pixels is produced. Each set of pixels comprises a pixel from each of the UV, visible, SWIR and LWIR images, and those pixels are registered together. Such a set of pixels is hereinafter referred to as a "set of registered pixels". Each pixel in a set of registered pixels corresponds to the same point in the portion 6 of the area of terrain 4.

At step s8, for each set of registered pixels, a spectral signature is produced.

In this embodiment, a spectral signature of a set of registered pixels comprises values of the amplitude of electromagnetic radiation (as measured for the point corresponding to that registered set of pixels by the image sensors 10) for a range of frequencies. In this embodiment, this range of frequencies encompasses each of the respective ranges of frequencies detected by the UV camera 14, the visible camera 16, the SWIR camera 18, and the LWIR camera 20.

Figure 5 is a schematic illustration (not to scale) of an example of a spectral signature 22 for a set of registered pixels.

A shown in Figure 5, a spectral signature 22 of a set of registered pixels comprises the amplitude of the electromagnetic radiation measured across a range of frequencies at the point corresponding to that set of registered pixels. The range of frequencies across which the amplitude of the electromagnetic radiation is measured comprises the range of frequencies detected by the UV camera 14, the range of frequencies detected by the visible camera 16, the range of frequencies detected by the SWIR camera 18, and the range of frequencies detected by the LWIR camera 20.

Returning to the process of Figure 4, at step s10, one of a plurality of different classes is assigned to each set of registered pixels.

In this embodiment, the class to that a set of registered pixels is assigned as depends on the terrain feature, or type of terrain, present at the point in the portion 6 of the area of terrain 4 to which that set of registered pixels corresponds.

For example, if the point in the portion 6 of the area of terrain 4 was covered in grass (e.g. the point was in a field), the corresponding set of registered pixels would be classified as "grass". If there was a building at the point in the portion 6 of the area of terrain 4, the corresponding set of registered pixels would be classified as "building".

Examples of other types of class, i.e. other types of terrain, or terrain features, which may be present at a point in the portion 6, are: rocks, sand, forest, water, and roads.

The use of a combination of UV, visible, SWIR and LWIR cameras tends to provide that a greater number of different types of terrain, or terrain features, may be distinguished from one another. Thus, a greater number of unique classes may be used to classify a set of registered pixels.

For example, an area of ground that has been recently disturbed tends to have a different spectral signature in the infrared range of frequencies to the spectral signature it would have if it had not been recently disturbed. Thus, it tends to be possible to classify recently disturbed ground differently to areas of ground that have not recently been disturbed. Such a differentiation may not be possible if a narrower range of frequencies (e.g. only the visible range) were used to provide the spectral signatures used for classification.

In this embodiment, the set of classes used for classification comprises the classes "undisturbed ground", "recently disturbed ground", and "object above surface of ground".

In this example, assignment of a classification to each set of registered pixels is performed manually, i.e. by a human operator.

Thus, after step s10, for each set of registered pixels, a spectral signature is determined and a class is specified. Thus, each determined signature corresponds to a certain class.

At step s12, a database, or "library", is formed. In this embodiment, this database comprises each of the spectral signatures determined at step s8 and the class to which that spectral signature corresponds.

In effect, this database provides a "look-up" table whereby a spectral signature measured at a point on the ground can be looked-up, and a corresponding classification for that point can be returned.

Thus, a method of capturing and processing images is provided. This method produces a database comprising a plurality of classes with one or more spectral signatures matched to each of those classes.

Figure 6 is a process flow-chart showing certain steps of an embodiment of a method of capturing and processing images in which the database generated using the process of Figure 4 is used to survey a further portion of the area of terrain 4.

At step s14, as the aircraft 2 flies over the area of terrain 4, each of the imaging sensors 10 is used to capture an image of a further portion of the area of terrain 4.

In this embodiment, the further portion of the area of terrain 4 is different to the portion 6 of the area of terrain 4. However, in other embodiments the portion 6 and the further portion are the same portion of the area of terrain 4.

In other words, as the aircraft 2 flies over the area of terrain a UV image of the further portion is captured using the UV camera 14, a visible image of the further portion is captured using the visible camera 16, a SWIR image of the further portion is captured using the SWIR camera 18, and a LWIR image of the further portion is captured using the LWIR camera 20.

At step s16, the images captured at step s14 are sent from the imaging sensors 10 to the processor 12.

At step s18, the processor 12 registers the images received from the imaging sensors 10, thereby producing a further registered set of images.

In this embodiment, the registration process used at step s18 is the same as that used at used step s6 and described in more detail above with reference to Figure 4.

Similarly to step s6 above, in this embodiment further sets of pixels are produced. Each further set of pixels comprises a pixel from each of the UV, visible, SWIR and LWIR images, of the further portion and those pixels are registered together. Such a further set of pixels is hereinafter referred to as a "further set of registered pixels". Each pixel in a further set corresponds to the same point in the further portion of the area of terrain 4.

At step s20, for each further set of registered pixels, a spectral signature 22 is determined.

In this embodiment, a spectral signature 22 of a further set of registered pixels is determined in the same way as a spectral signature 22 of a set of registered pixels is determined (i.e. as preformed at step s8 and described in more detail above with reference to Figure 4).

At step s22, each further set of registered pixels is classified as one of the classes.

In this embodiment, each further set of registered particles is classified using the database generated by performing the process of Figure 4.

In this embodiment, a further set of registered particles is classified as follows.

Firstly, a spectral signature in the database that is the closest to, or is substantially identical to, the spectral signature of the further set of registered pixels being classified is identified. In this embodiment, this is performed using a conventional statistical analysis process is used to compare the measured spectral signatures of the further sets of registered pixels to the stored spectral signatures in the database.

Secondly, the further set of registered pixels is classified as the class that corresponds to the identified spectral signature in the database.

At step s24, as the aircraft 2 flies over the area of terrain 4, the GPR 8 is used to capture an image of a further portion of the area of terrain 4.

In other words, a GPR image of the further portion is captured.

At step s26, the GPR image captured at step s18 is sent from the GPR 8 to the processor 12.

At step s28, the processor 12 processes the GPR image to detect features of interest within the GPR image.

In this embodiment, the features of interest within the GPR image are detected using a conventional detection process. Any appropriate detection process may be used.

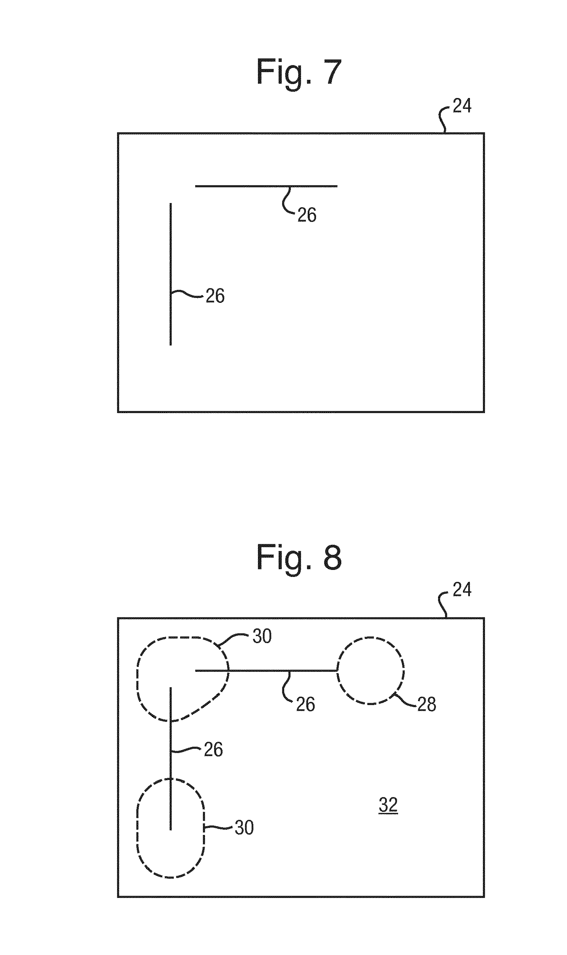

Figure 7 is a schematic illustration (not to scale) of an example of a GPR image 24.

In this embodiment, the GPR image 24 comprises two image features, hereinafter referred to as the "GPR image features 26", which are detected at step s22.

In this embodiment, the GPR image features 26 are the images of wires that are buried beneath the surface of the ground within the further portion of the area of terrain 4.

Returning to the process-flowchart of Figures 6, at step s30, the processor 12 registers the GPR image 24 with the images from the imaging sensors 10.

In this embodiment, a conventional image registration technique is used to register the images from the GPR 8 and the imaging sensors 6, e.g. a feature-based registration process. Any appropriate registration process may be used.

At step s32, using the registered GPR image 24 and imaging sensor images, further sets of registered pixels of the imaging sensor images that are positioned at or proximate to the GPR image features 26 are identified.

At steps 34, the classifications of the further sets of registered pixels identified at step s32 are associated with the points of the GPR image 24 that correspond to those further sets of registered pixels.

In this embodiment, this association of the classes to points in the GPR image 24 is performed to provide further information about the GPR image features 26 that are identified at step s28.

Figure 8 is a schematic illustration (not to scale) of the GPR image 24 together with the associated classification information from the imaging sensor images.

The classification information shown in Figure 8 shows, a region classified as "object above surface of ground" (indicated in Figure 8 by dotted lines and the reference numeral 28), two regions classified as "recently disturbed ground" (indicated in Figure 8 by dotted lines and the reference numeral 30), and a region classified as "undisturbed ground" (indicated in Figure 8 by dotted lines and the reference numeral 32).

At step s36, the GPR image 24 together with the associated classification information is provided to a user, or operator, for analysis.

In this embodiment, the user analyses the GPR image 24 together with the associated classification information to detect and identify objects of interest (targets) in the area of terrain 4. In this embodiment, this target detection and identification is manually performed by the user.

The provided GPR image 24 and classification information advantageously allows the user to analyse and compare information across multiple image spectra. This tends to facilitate target detection and identification.

In this embodiment, the GPR image 24 and classification information provided to the user allow the user to interconnect individual features detected across multiple image spectra. In particular, in this embodiment the user may infer from the provided GPR image 24 and classification information that a detected object (i.e. the region classified as "object above surface of ground" 28) is a man-made object as it is connected to underground wires (i.e. the GPR image features 26) to a location remote from the object. Furthermore, as the ground surrounding the underground wires is classified as "recently disturbed ground" 30, the user may infer that the object has been installed recently.

The user may perform, or initiate the performance, of an action depending on their analysis of the GPR image 24 and classification information.

Thus, a method of using the database generated using the process of Figure 4 to survey a further portion of the area of terrain 4 is provided.

The above described systems and methods provide that information across multiple image spectra is used to provide a classification for regions in the area of terrain. This tends to provide more accurate classifications of terrain types and/or terrain features.

Furthermore, the use of spectral signatures that span multiple image spectra tend to facilitate the differentiation of terrain types/features. Also, this tends to provide that a greater number of different types of terrain types and/or terrain features may be differentiated from one another. Thus, it tends to be possible to have a greater number of unique classes as which types of terrain or terrain features may be classified.

In other words, using information from multiple image spectra tends to allow for the differentiation between terrain types or terrain features that would otherwise be undifferentiable (i.e. if information from only a single image spectrum was used).

As described in more detail above, the GPR is used to detect objects on or buried near to the ground surface. This information is be used to connect image features detected across the multiple image spectra. Likewise, the classifications provided by the multiple image spectra information provide a context for the GPR information. Thus, the multiple image spectra information may be advantageously used to support, clarify and/or facilitate the interpretation of the GPR information, and vice versa.

The synergistic combination of GPR information (i.e. range data, or 3-dimensional data) and the multiple image spectra information provided by the imaging sensors (2-dimensional classification data) advantageously tends to allow for more accurate detection and identification of targets.

It tends to be possible to generate a database of spectral signatures for classification purposes at any time prior to that database being used for classification purposes.

Furthermore, a database may be tailored depending on the particular scenario in which the surveying of the area of the terrain is performed. For example, database entries may be removed from the database such that the resulting reduced database only includes classifications for terrain features, types of terrain, or object that might reasonably be expected to occur in the area being surveyed. Also, the entries of the database (i.e. the spectral signatures) may be normalised or filtered, or in some other way processed, to account for environmental conditions (i.e. the weather) present when the surveying of the terrain is performed, and/or to account for the time-of-day (i.e. light levels and temperature) at which the surveying of the terrain is performed. Such database tailoring tends to achieve greater efficiency and more accurate classification/target detection.

A further advantage of the above described system and methods is that real-time, or near-real-time, classification, database generation, and/or target detection/identification tend to be possible.

A further advantage of the above described system and methods is that, using the above described techniques, it tends to be possible to determine whether a disturbance of an area of ground is a recent (i.e. relatively fresh) disturbance, or whether a disturbance of an area of ground is a relatively older disturbance.

Apparatus, including the processor 12, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowcharts of Figures 4 and 6 and described above may be omitted or such process steps may be performed in differing order to that presented above and shown in the Figures. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the above described systems and methods are implemented in the particular scenario of Figure 1. However, in other embodiments one or both of these methods are implemented in a different scenario. For example, in the above embodiments the aircraft is used to capture and process images so as to generate a database to be used, by the aircraft, to perform a classification process. However, in other embodiments, the aircraft is used to capture and process images for generating a database for use by an entity other than the aircraft. In other embodiments, the aircraft uses a database generated by an entity other than the aircraft.

In the above embodiments, an aircraft is used to implement the above described systems and method. However, in other embodiments one or more different types of entity (e.g. a different type of vehicle) is used to implement an above described system and/or method. For example, in other embodiments a land-based vehicle or a water-based vehicle is used to implement an above described systems or method.

In the above embodiments, the set of imaging sensors comprises a UV camera, a visible camera, a SWIR camera, and a LWIR camera. However, in other embodiments the set of imaging sensors comprises a different set of sensors or cameras such that information across multiple image spectra is captured. For example, in other embodiments, the set of imaging sensors comprises one or more different types of sensor instead of or in addition to any of those listed previously.

In the above embodiments, at step s10 the user manually classifies (as one of a plurality of different classes) each set of registered pixels is. However, in other embodiments the classification of a set of registered pixels is performed using a different appropriate method. For example, the signatures for different types of ground could be specified e.g. manually by an operator, or compute from other data.

In the above embodiments, the database generated using the process of Figure 4 is used to survey a further portion of the area of terrain. In the above embodiments, the database is used, by a user, to facilitate the detection and identification of targets of interest within the further portion of the area of terrain. However, in other embodiments the database is used for a different purpose. For example, in other embodiments the database is used to ascertain a state for a known asset, e.g. GPR measurements may be used to detect an underground pipeline, whilst the multi-spectral image data may be used locate any leaks or damage to that pipeline.

In the above embodiments, range image data from the GPR is used in combination with the 2-dimensional image data gained by capturing images across multiple image spectra. The surveying of the further portion of the area of terrain is performed using images taken across multiple image spectra, and images from a GPR. However, in other embodiments a range image from a different type of source (i.e. a source other than a GPR) is used in combination with the 2-dimensional image data from the imaging sensors. For example, in other embodiments a LASER/Light Distance and Ranging (LIDAR) sensor, which is capable of detecting surface contours or changes, is used in combination with the 2-dimensional image data gained by capturing images across multiple image spectra.

In the above embodiments, the user manually analyses the GPR image together with the associated classification information to detect and identify targets in the further portion of the area of terrain. However, in other embodiments, the analysis of the GPR image and associated classification information is performed in a different appropriate way. For example, in other embodiments a fuzzy logic algorithm, e.g. performed by a processor, may be used to detect and identify targets.

## Claims

1. A method of capturing and processing images, the images being of an area of terrain (6), the method comprising:
using each of a plurality of cameras (14, 16, 18, 20), capturing an image of the area of terrain (6) thereby producing a plurality of camera images, each camera image comprising a plurality of pixels;
registering the camera images, thereby producing a plurality of sets of registered pixels;
classifying each set of registered pixels;
using a range sensor (8), capturing a range image (24) of the area of terrain (6);
performing a detection algorithm on the range image (24) to detect an object or terrain feature (26) in the range image;
registering the range image (24) with a camera image; and
associating the detected object or terrain feature (26) with at least one classified set of registered pixels (28, 30).

2. A method according to claim 1, wherein each of the plurality of cameras (14, 16, 18, 20) is for detecting electromagnetic radiation in a different frequency range to each of the other cameras in the plurality.

3. A method according to claim 2, wherein the frequency range in which each camera (14, 16, 18, 20) detects electromagnetic radiation overlaps at least partially with the frequency range in which a different camera detects electromagnetic radiation.

4. A method according to any of claims 2 to 3, wherein the plurality of cameras (14, 16, 18, 20) comprises a first camera (14) for detecting electromagnetic radiation in the ultraviolet range of frequencies, a second camera (16) for detecting electromagnetic radiation in the visible light range of frequencies, and a third camera (18, 20) for detecting electromagnetic radiation in the infrared range of frequencies.

5. A method according to any of claims 1 to 4, wherein the step of classifying each set of registered pixels comprises:
for each set of registered pixels, determining a spectral signature using the image data from each of the plurality of cameras (14, 16, 18, 20); and
classifying a set of registered pixels depending on its spectral signature.

6. A method according claim 5, wherein the step of classifying a set of registered pixels depending on its spectral signature comprises comparing the spectral signature of the set of registered pixels to a spectral signature stored in a database.

7. A method according to claim 6, the method further comprising generating the database, wherein the step of generating the database comprises:
using each of a further plurality of cameras, capturing an image of a further area of terrain thereby producing a further plurality of camera images, each camera image in the further plurality comprising a plurality of pixels;
registering the camera images in the further plurality, thereby producing a further plurality of sets of registered pixels;
for each set of registered pixels in the further plurality, determining a spectral signature using the image data from each of the further plurality of cameras;
assigning a class to each of determined spectral signatures; and
forming the database from the determined spectral signatures and corresponding assigned classes.

8. A method according to any of claims 5 to 7, wherein the spectral signature of a set of registered pixels spans at least part of the following frequency ranges: the ultraviolet range of frequencies, the visible light range of frequencies, and the infrared range of frequencies.

9. A method according to any of claims 1 to 6, wherein the range sensor (8) is a ground penetrating radar or a LIDAR sensor.

10. A method according to any of claims 1 to 7, the method further comprising performing an identification process to identify the detected object or terrain feature (26) using the at least one classified set of registered pixels associated with the detected object or terrain feature (26).

11. A method according to any of claims 1 to 10, wherein the plurality of cameras (14, 16, 18, 20) and the range sensor (8) are mounted on an aircraft (2).

12. Apparatus for capturing and processing images, the images being of an area of terrain (6), the apparatus comprising:
a plurality of cameras (14, 16, 18, 20), each of the plurality of cameras (14, 16, 18, 20) being for capturing an image of the area of terrain thereby producing a plurality of camera images, each camera image comprising a plurality of pixels;
a range sensor (8) for capturing a range image (24) of the area of terrain (6); and
one or more processors (12) arranged to:
register the camera images, thereby producing a plurality of sets of registered pixels;
classify each set of registered pixels;
perform a detection algorithm on the range image to detect an object or terrain feature (26) in the range image (24);
register the range image (24) with a camera image; and
associate the detected object or terrain feature (26) with at least one classified set of registered pixels (28, 30).

13. An aircraft (2) comprising the apparatus of claim 12.

14. A program or plurality of programs arranged such that when executed by a computer system or one or more processors it/they cause the computer system or the one or more processors to operate in accordance with the method of any of claims 1 to 11.

15. A machine readable storage medium storing a program or at least one of the plurality of programs according to claim 14.
